# EUROPEAN PATENT APPLICATION

(11) **EP 4 287 328 A1**
(43) Date of publication of application: **06.12.2023**
(21) Application number: 22878896.4
(22) Date of filing: 05.10.2022
(51) Int. Cl.: H01M 10/04, H01M 10/48

(54) **ELECTRODE ASSEMBLY, CYLINDRICAL BATTERY, AND SYSTEM COMPRISING SAME**

(30) Priority: 05.10.2021 KR 20210131993
(71) Applicant: LG Energy Solution, Ltd., Seoul 07335 (KR)
(72) Inventor: KWON, Yong-Hwan, Daejeon 34122 (KR); KIM, Dong-Wook, Daejeon 34122 (KR); KIM, Yong-Il, Daejeon 34122 (KR)
(74) Representative: Goddar, Heinz J.
(86) International application number: PCT/KR2022/015012
(87) International publication number: WO 2023/059075

(57) **Abstract**

The present disclosure discloses an electrode assembly and a cylindrical battery comprising the same. The electrode assembly includes a first electrode sheet, a second electrode sheet and a separator sheet interposed therebetween, wherein the first electrode sheet, the second electrode sheet and the separator are wound in one direction. The electrode assembly has a cavity along a winding central axis, and a netlike tube-shaped support is installed along a lengthwise direction of the cavity. A wireless pressure sensor or a wireless temperature sensor may be installed in at least one location of an outer or inner surface of the netlike tube-shaped support. The cylindrical battery includes the electrode assembly.

## Description

### TECHNICAL FIELD

The present disclosure relates to an electrode assembly, a cylindrical battery and a system, and more particularly, to an electrode assembly having an improved core structure, a cylindrical battery and a system comprising the same.

The present application claims priority to Korean Patent Application No. 10-2021-0131993 filed on October 5, 2021 in the Republic of Korea, the disclosure of which are incorporated herein by reference.

### BACKGROUND ART

Recently, with the widespread use of cylindrical batteries in electric vehicles, electric bikes and electric two-wheeled vehicles, the form factor is increasing to increase the output and capacity of the cylindrical batteries.

The form factors of cylindrical batteries are 1865, 2170, 4680, etc. In the form factor, the former two numbers indicate the diameter of a cylindrical battery, and the remaining numbers indicate the height of the cylindrical battery. For example, 4680 is the form factor of a cylindrical battery which is 46 mm in diameter and 80 mm in height.

The cylindrical battery includes an electrode assembly formed by winding two elongated electrode sheets having opposite polarities with a separator interposed therebetween. A winding means such as a center pin or a bobbin is used when winding the electrode assembly.

The winding means may be removed from the center of the electrode assembly to improve the electrolyte wettability and form a tab welding pathway. In this case, after the winding means is removed, a cavity is formed at that location along the lengthwise direction of the electrode assembly.

Meanwhile, with the increasing form factors of cylindrical batteries, the amount of heat generated in the batteries during charging/discharging also increases. When the form factor is large, the charge/discharge current increases, and along with this, Joule heating originated from the internal resistance of the electrode assembly also increases.

The heat generated during charging/discharging is one of the causes of swelling of the electrode assembly. Accordingly, as the form factor of cylindrical batteries increases, swelling occurs more easily.

When the electrode assembly swells, stress occurs in the radial direction and the cavity of the core does not maintain its shape and collapses.

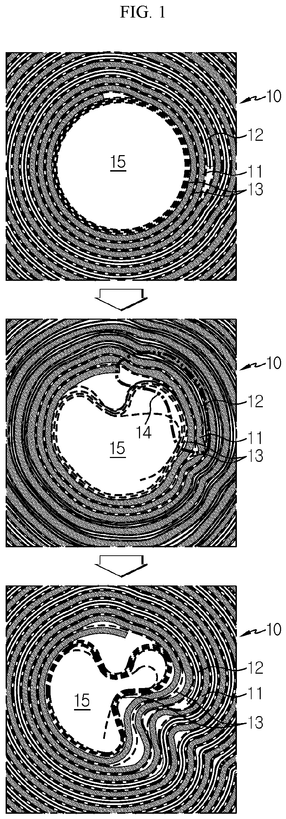

FIG. 1 shows the collapse of the core of the electrode assembly 10 that does not maintain its shape in the event of swelling in the related art.

In the drawing, the reference number 11 denotes a first electrode sheet having a first polarity, the reference number 12 denotes a second electrode sheet having a second polarity that is contrary to the first polarity, and the reference number 13 denotes a separator sheet interposed between the first electrode sheet 11 and the second electrode sheet 12.

The number of separator sheets 13 is 2. One is interposed between the first electrode sheet 11 and the second electrode sheet 12, and the other is used as a film for winding the two electrode sheets stacked facing each other with the separator sheet interposed therebetween.

When stress occurs in the radial direction due to the swelling of the electrode assembly 10, the corresponding stress concentrates on an area 14 having a smaller number of turns in the electrode sheet. This is because the area 14 having a smaller number of turns in the electrode sheet has lower strength. As a result, the cavity 15 of the dotted area 14 does not maintain its shape and starts to collapse. Additionally, when the swelling of the electrode assembly 10 gets worse, the collapse of the cavity 15 propagates to the adjacent area and the cavity 15 collapses faster.

The collapse of the cavity 15 forms a micro gap between the first electrode sheet 11 and the second electrode sheet 12 in the core of the electrode assembly 10. Since electrochemical reactions do not occur at the area having the gap, the performance of the cylindrical battery suddenly degrades. This problem is more likely to occur with the increasing form factor. This is because with the increasing diameter of the winding means used when winding the electrode assembly 10, the diameter of the cavity 15 increases as well. When the diameter of the cavity 15 increases, the area near the cavity 15 in the electrode assembly 10 is more prone to stress.

Additionally, when the cavity 15 collapses, the separator sheet 13 interposed between the first electrode sheet 11 and the second electrode sheet 12 breaks, which causes an internal short circuit between the first electrode sheet 11 and the second electrode sheet 12. At the location of the internal short circuit, a large current flows, thereby leading to a sharp temperature rise. Accordingly, the internal short circuit caused by the swelling of the electrode assembly 10 is the main cause of a fire in the cylindrical battery.

### DISCLOSURE

### Technical Problem

The present disclosure is designed under the background of the prior art, and therefore, the present disclosure is directed to providing an electrode assembly having an improved core structure for swelling resistance while maintaining a cavity of the core and a cylindrical battery comprising the same.

The present disclosure is further directed to providing an electrode assembly having a wireless sensor means to pre-detect a potential swelling that is likely to cause the cavity of the core to collapse and a cylindrical battery comprising the same.

The present disclosure is further directed to providing an electrode assembly having a wireless sensor means to pre-detect a potential sharp temperature rise in the electrode assembly core caused by an internal short circuit and a cylindrical battery comprising the same.

The present disclosure is further directed to providing a system for remotely monitoring the pressure and/or temperature of an area near the core of the cylindrical battery.

### Technical Solution

To solve the above-described technical problem, an electrode assembly according to the present disclosure includes a first electrode sheet, a second electrode sheet and a separator sheet interposed therebetween, wherein the first electrode sheet, the second electrode sheet and the separator are wound in one direction, wherein the electrode assembly has a cavity along a winding central axis, and wherein a netlike tube-shaped support is installed along a lengthwise direction of the cavity.

Preferably, the separator sheet may include a first separator sheet and a second separator sheet, and the first separator sheet, the second electrode sheet, the second separator sheet and the first electrode sheet may be stacked in a sequential order and wound in one direction.

Preferably, the netlike tube-shaped support may be a netlike tube made from a wire and/or a strap.

In an aspect, the netlike tube-shaped support may be a stent support.

Preferably, the netlike tube-shaped support may be extendable and shrinkable in a radial direction and/or the lengthwise direction.

In an aspect, a gap may be present between the netlike tube-shaped support and an inner wall of the cavity.

In another aspect, a wireless sensor may be attached to the netlike tube-shaped support.

In an example, the wireless sensor may be a wireless pressure sensor, and the wireless pressure sensor may be installed in at least one location of an outer or inner surface of the netlike tube-shaped support.

In another example, the wireless sensor may be a wireless temperature sensor, and the wireless temperature sensor may be installed in at least one location of an outer or inner surface of the netlike tube-shaped support.

To solve the above-described technical problem, a cylindrical battery according to another aspect of the present disclosure includes an electrode assembly including a first electrode sheet, a second electrode sheet and a separator sheet interposed therebetween, wherein the first electrode sheet, the second electrode sheet and the separator sheet are wound in one direction, and the electrode assembly has a cavity along a winding central axis; a netlike tube-shaped support installed along of a lengthwise direction of the cavity; a case accommodating the electrode assembly and having an open part at one side thereof; and a cap assembly coupled to the open part of the case in a manner that the cap assembly can be insulated.

Preferably, the separator sheet may include a first separator sheet and a second separator sheet, and the first separator sheet, the second electrode sheet, the second separator sheet and the first electrode sheet may be stacked in a sequential order and wound in one direction.

Preferably, the netlike tube-shaped support may be a netlike tube made from a wire and/or a strap.

In an aspect, the netlike tube-shaped support may be a stent support.

Preferably, the netlike tube-shaped support may be extendable and shrinkable in a radial direction and/or the lengthwise direction.

In an aspect, a gap may be present between the netlike tube-shaped support and an inner wall of the cavity.

In another aspect, a wireless sensor may be attached to the netlike tube-shaped support.

In an example, the wireless sensor may be a wireless pressure sensor, and the wireless pressure sensor may be installed in at least one location of an outer or inner surface of the netlike tube-shaped support.

In another example, the wireless sensor may be a wireless temperature sensor, and the wireless temperature sensor may be installed in at least one location of an outer or inner surface of the netlike tube-shaped support.

In another aspect, one end of the netlike tube-shaped support may be fixed to the cap assembly or a bottom plate of the case through a fixing tab.

In still another aspect, one end of the netlike tube-shaped support may be fixed to an inner wall of the cavity through a fixing sleeve.

To solve the above-described technical problem, a system includes a cylindrical battery including an electrode assembly, the electrode assembly including a first electrode sheet, a second electrode sheet and a separator sheet interposed therebetween, wherein the first electrode sheet, the second electrode sheet and the separator sheet are wound in one direction, and the electrode assembly has a cavity along a winding central axis; a netlike tube-shaped support installed along a lengthwise direction of the cavity; a case accommodating the electrode assembly and having an open part at one side thereof; and a cap assembly coupled to the open part of the case in a manner that the cap assembly can be insulated; a wireless sensor attached to the netlike tube-shaped support and configured to wirelessly transmit a pressure sensing value or a temperature sensing value; and a detection device configured to receive the pressure sensing value or the temperature sensing value from the wireless sensor and monitor a pressure or temperature of a location at which the wireless sensor is installed.

When the pressure sensing value or the temperature sensing value is larger than a preset threshold, the system may be configured to control a switch installed on a line through which a charge or discharge current of the cylindrical battery flows to stop the charge or discharge of the cylindrical battery, or generate a warning message notifying a potential abnormality in the cylindrical battery and output the warning message through a display.

### Advantageous Effects

According to an aspect of the present disclosure, the netlike tube-shaped support inserted into the cavity of the electrode assembly used in the cylindrical battery reinforces the strength of the core. Accordingly, it is possible to prevent the collapse of the cavity when the electrode assembly swells, thereby preventing an increase in internal resistance or an occurrence of an internal short circuit in the core of the electrode assembly.

According to another aspect of the present disclosure, the wireless pressure sensor attached to the netlike tube-shaped support may pre-detect a potential swelling that is likely to cause the cavity of the electrode assembly to collapse. Additionally, when the cavity actually starts to collapse, it is possible to accurately detect the intensity of stress applied to the corresponding area and the location of the corresponding area.

According to still another aspect of the present disclosure, the wireless temperature sensor attached to the netlike tube-shaped support may pre-detect a potential overheating in the cavity of the electrode assembly. Additionally, it is possible to accurately detect the temperature and location of the corresponding area in the event of overheating.

### DESCRIPTION OF DRAWINGS

The accompanying drawings illustrate an exemplary embodiment of the present disclosure, and together with the following detailed description, serve to provide a further understanding of the technical aspects of the present disclosure, and thus the present disclosure should not be construed as being limited to the drawings.
FIG. 1 exemplarily shows a collapse of a cavity of a core in the event of a swelling of an electrode assembly according to the related art.
FIG. 2 is a cross-sectional view of an electrode assembly according to an embodiment of the present disclosure, taken along a radial direction.
FIG. 3 is a process diagram showing a process of manufacturing an electrode assembly according to an embodiment of the present disclosure.
FIG. 4 is a cross-sectional view of an electrode assembly according to an embodiment of the present disclosure, taken along a lengthwise direction.
FIG. 5 is a diagram showing various structures of a stent support according to an embodiment of the present disclosure.
FIG. 6a is a cross-sectional view of a cylindrical battery including an electrode assembly according to an embodiment of the present disclosure, and FIG. 6b is an exploded perspective view of a cap assembly according to an embodiment of the present disclosure.
FIG. 7 is a block diagram showing the configuration of a wireless pressure sensor and a detection device according to an embodiment of the present disclosure.
FIG. 8 is a block diagram showing the configuration of a wireless temperature sensor and a detection device according to an embodiment of the present disclosure.

### BEST MODE

Hereinafter, an exemplary embodiment of the present disclosure will be described in detail with reference to the accompanying drawings. The embodiments of the present disclosure are provided to explain the present disclosure thoroughly and completely to those skilled in the art, and the following embodiments may be modified in many other forms, and the scope of the present disclosure is not limited to the following embodiments. Rather, these embodiments are provided so that the present disclosure will be thorough and complete, and will fully convey the scope of the present disclosure to those skilled in the art.

In the accompanying drawings, the thickness or size of each layer is exaggerated for convenience and clarity of description, and like reference numerals denote like elements in the drawings. As used herein, the term "and/or" includes all combinations of at least one of the corresponding stated items. Additionally, when an element is referred to as being "connected to" another element, it can be directly connected to the other element or intervening elements may be present.

The terminology used herein is used to describe particular embodiments only and is not intended to be limiting of the present disclosure. As used herein, the singular term may include the plural terms as well, unless the context clearly indicates otherwise. Additionally, "comprise" and/or "comprising" when used in this specification, specify the presence of stated features, numbers, steps, operations, elements, components and/or groups thereof, but do not preclude the presence or addition of one or more other features, numbers, steps, operations, elements, components, and/or groups thereof.

The terms first, second, etc. are used to describe various elements, components, areas, layers and/or regions, but it is obvious that these elements, components, areas, layers and/or regions are not limited by the terms. These terms are used to distinguish one element, component, area, layer or region from another. Accordingly, the first element, component, area, layer or region as described below may refer to the second element, component, area, layer or region without departing from the teachings of the present disclosure.

The terms related to space such as "beneath", "below", "lower", "above" and "upper" are used for easy understanding of one element or feature from another shown in the drawings. The terms related to space are used for easy understanding of the present disclosure according to various processing or use conditions of the present disclosure, and are not intended to limit the present disclosure. For example, when the element or feature in the drawing is upside down, the element "beneath" or "below" may be present "above" or "on". Accordingly, "below" is the concept encompassing "above" or "below".

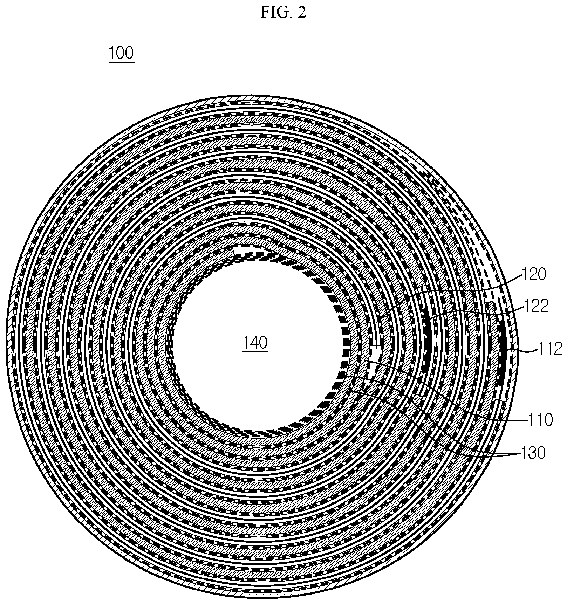

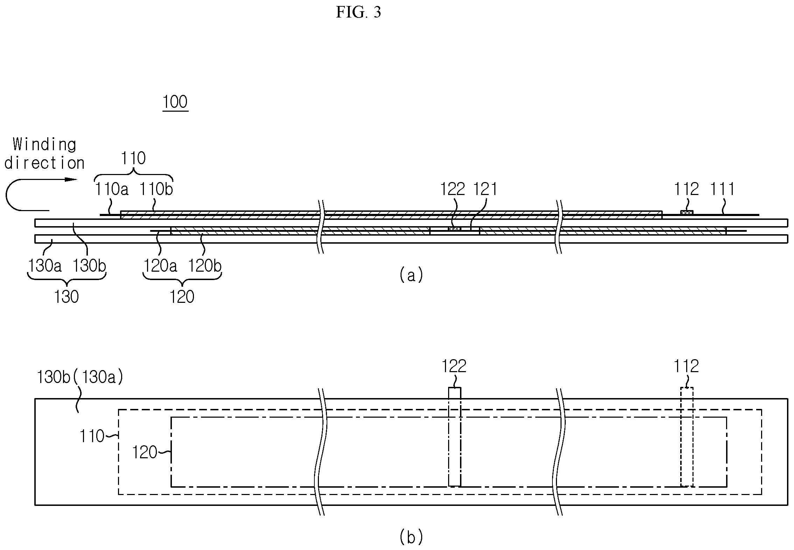

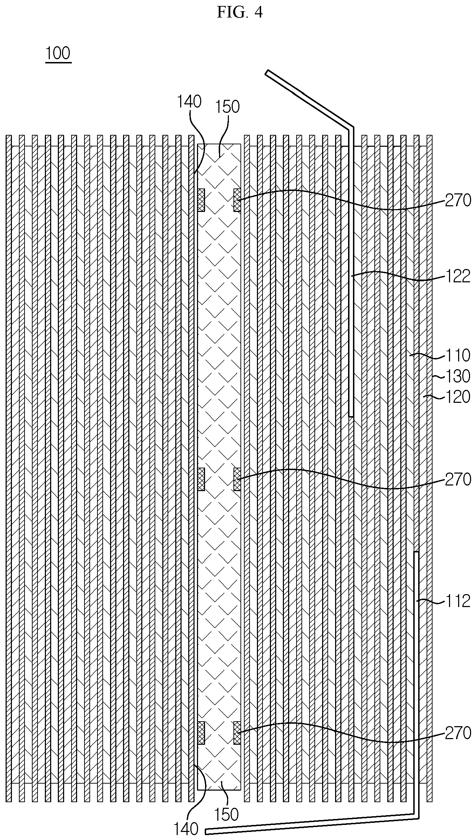

FIG. 2 is a cross-sectional view of an electrode assembly 100 according to an embodiment of the present disclosure, taken along a radial direction, and FIG. 3 is a process diagram showing a process of manufacturing the electrode assembly 100 according to an embodiment of the present disclosure. FIG. 3(a) is a cross-sectional view of the components, and FIG. 3(b) is a top view of the components. FIG. 4 is a cross-sectional view of the electrode assembly 100 according to an embodiment of the present disclosure, taken along a lengthwise direction.

Referring to FIG. 2, the electrode assembly 100 according to the present disclosure includes a first electrode sheet 110 having a first polarity, a second electrode sheet 120 having a second polarity and a separator sheet 130.

The first polarity and the second polarity are opposite to each other. In an example, the first polarity is negative and the second polarity is positive. In another example, the first polarity may be positive and the second polarity may be negative.

Referring to FIG. 3, the electrode assembly 100 may be manufactured by stacking a first separator sheet 130a, the second electrode sheet 120, a second separator sheet 130b and the first electrode sheet 110 in a sequential order and continuously winding the stack of sheets in one direction.

After the 4 sheets are wound, the sheets may be fixed in the wound state through a hot press process involving applying heat and pressure to the electrode assembly 100. Alternatively, to fix in the wound state, a tape may be attached to an area of the last turn in the first separator sheet 130a.

The second separator sheet 130b plays a role in electrically separating the first electrode sheet 110 from the second electrode sheet 120. The first electrode sheet 110, the second separator sheet 130b and the second electrode sheet 120 forms a cell that can be electrochemically charged or discharged. The first separator sheet 130a is used as a film to wind the cell.

The first and second separator sheets 130a, 130b are made of a porous film having insulating properties. In an example, the porous film may be a polyolefin based porous film. The porous film may have a coating layer of ceramic particles on the surface thereof.

The first and second separator sheets 130a, 130b may be made of same or different materials. Additionally, the coating of the ceramic particles may be only formed on the second separator sheet 130b. The first and second separator sheets 130a, 130b made of even the same material may have different melting points.

The first electrode sheet 110 includes a current collector 110a and an active material 110b of the first polarity coated on one or two surfaces of the current collector 110a. Likewise, the second electrode sheet 120 includes a current collector 120a and an active material 120b of the second polarity coated on one or two surfaces of the current collector 120a.

The current collector for the positive electrode may include stainless steel, nickel, titanium, sintered carbon, aluminum or stainless steel treated with carbon, nickel, titanium or silver on the surface thereof.

The active material for the positive electrode may include a lithium containing transition metal oxide or a lithium chalcogenide compound. Typical examples may include metal oxide such as LiCoO₂, LiNiO₂, LiMnO₂, LiMn₂O₄, LiFePO₄ or Li_{1+z}Ni_{1-x-y}CoₓM_{y}O₂ (0≤x≤1, 0≤y≤1, 0≤x+y≤1, 0≤z≤1, M is a metal, for example, Al, Sr, Mg, La, Mn or the like).

The current collector for the negative electrode may include stainless steel, aluminum, nickel, titanium, sintered carbon, copper or stainless steel treated with carbon, nickel, titanium or silver on the surface thereof, and may include an aluminum-cadmium alloy.

The active material for the negative electrode may include a carbon material, for example, crystalline carbon, amorphous carbon, a carbon composite, a carbon fiber or the like, a lithium metal, a lithium alloy, silicon, a silicon alloy or the like.

Meanwhile, since the present disclosure is characterized by the structure of the electrode assembly 100, the positive/negative electrode current collector, the positive/negative electrode active material and the separator are not limited to particular types of materials.

Referring to FIG. 3, the first electrode sheet 110 has an uncoated portion 111 at a predetermined area. The uncoated portion 111 is a region in which the active material is not coated. Additionally, the first electrode sheet 110 includes a first tab 112 attached to the uncoated portion 111. The first tab 112 may be attached to the uncoated portion 111 by ultrasonic welding. As shown in the drawing, the uncoated portion 111 may be formed at one end of the current collector. In another example, the uncoated portion 111 may be formed in the middle of the active material layer 110b.

The second electrode sheet 120 has an uncoated portion 121 at a predetermined area. Additionally, the second electrode sheet 120 includes a second tab 122 attached to the uncoated portion 121. The second tab 122 may be attached to the uncoated portion 121 by ultrasonic welding. As shown in the drawing, the uncoated portion 121 may be formed in the middle of the active material layer 120b. In another example, the uncoated portion 121 may be formed at one end of the current collector 120a.

Referring to FIG. 4, the core of the electrode assembly 100 according to an embodiment of the present disclosure has a cavity 140. The cavity 140 is formed by removing a winding means (a bobbin) used in the process of winding the electrode assembly 100.

Preferably, a netlike tube-shaped support 150 is inserted into the cavity 140 of the electrode assembly 100 along the lengthwise direction.

The netlike tube-shaped support 150 is a netlike tube made from a wire and/or a strap.

Preferably, the netlike tube-shaped support 150 may be a stent support. The stent is a medical instrument that is inserted into an obstructed area of a blood vessel or a digestive tract. The stent is a netlike tube formed from a wire and/or a strap.

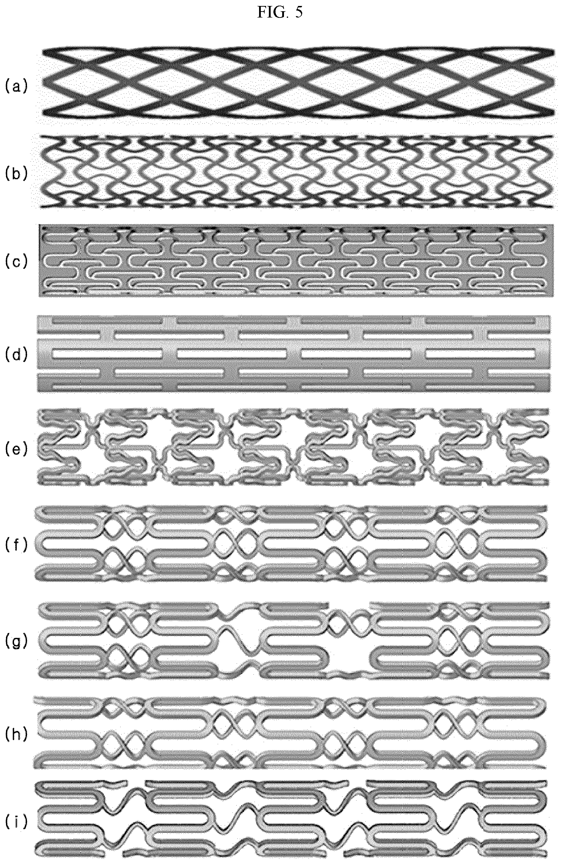

FIG. 5 is a diagram showing various structures of the stent support according to an embodiment of the present disclosure. In each stent structure, the shape, thickness, width and pitch of the wire and/or the strap may be determined using a finite element analysis tool considering the strength required for the netlike tube-shaped support 150.

It is obvious to those skilled in the art that a variety of other stent structures known in the corresponding technical field than those shown in FIG. 5 may be applied to the structure of the netlike tube-shaped support 150.

The netlike tube-shaped support 150 can elastically extend and shrink in the radial direction and/or the lengthwise direction. Accordingly, the netlike tube-shaped support 150 inserted into the cavity 140 of the electrode assembly 100 absorbs stress occurring around the cavity 140 through elastic deformation when the electrode assembly 100 swells, thereby preventing the collapse of the cavity 140. Additionally, the netlike tube-shaped support 150 is hollow and has a plurality of openings in the walls. Accordingly, the netlike tube-shaped support 150 does not obstruct the flow of the electrolyte in the process of electrolyte infiltration into the electrode assembly 100 and does not decrease the energy density of the cylindrical battery.

The material of the wire and/or the strap may be appropriately selected considering the strength of the netlike tube-shaped support 150. The material of the wire and/the strap may be selected from metals, alloys or plastics. In a preferred example, the material of the wire and/or the strap may be stainless steel or a shape memory alloy.

Preferably, the netlike tube-shaped support 150 may be installed while expanding in the radial direction and the lengthwise direction within the cavity 140 after it is manufactured with a reduced radius and length. This installation method is well known in the field of stent technology. The existing stent installation method may be used to install the netlike tube-shaped support 150 in substantially the same manner.

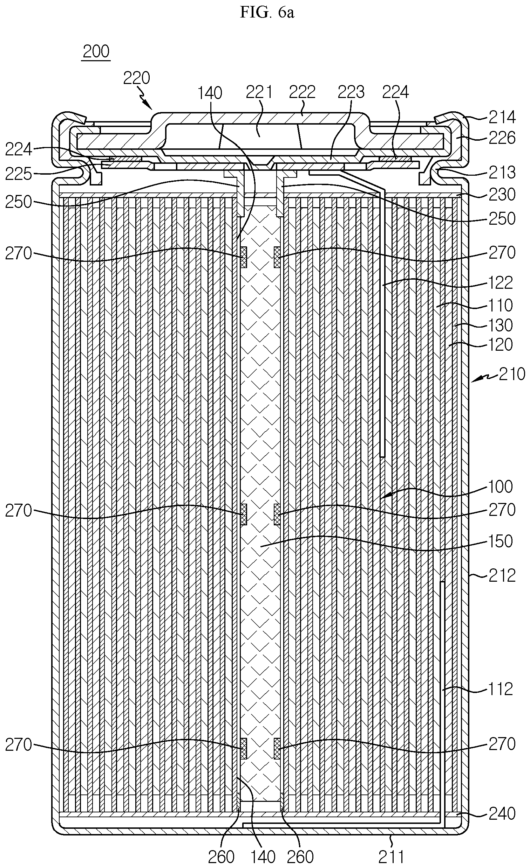

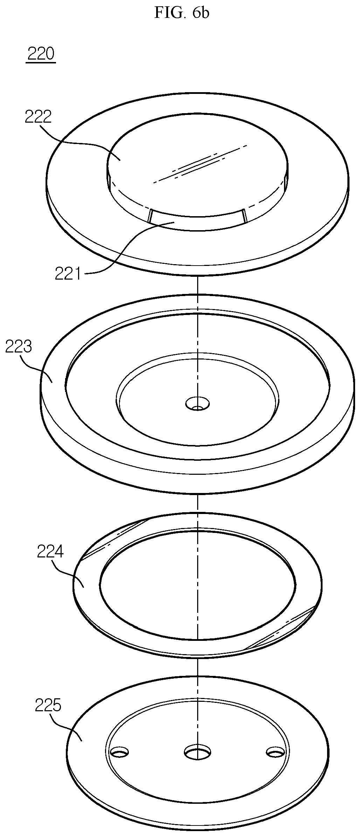

FIG. 6a is a cross-sectional view of a cylindrical battery 200 including the electrode assembly 100 according to an embodiment of the present disclosure, and FIG. 6b is an exploded perspective view of a cap assembly 220 according to an embodiment of the present disclosure.

Referring to FIGS. 6a and 6b, the cylindrical battery 200 includes the electrode assembly 100, a case 210 accommodating the electrode assembly 100 and having an open part at one side thereof, and the cap assembly 220 to seal the open part of the case 210.

The case 210 includes a circular bottom 211, and a sidewall 212 extended to a predetermined length upwards from the bottom 211. In the process of manufacturing the cylindrical battery 200, the case 210 may have an open top. Accordingly, in the assembly process, the electrode assembly 100 may be inserted into the case 210 together with an electrolyte solution.

The case 210 may be made of steel, a steel alloy, aluminum, an aluminum alloy or an equivalent thereof, but the material is not limited thereto. Additionally, the case 210 may include a beading part 213 recessed inwards below the cap assembly 220 to prevent the electrode assembly 100 from escaping, and a crimping part 214 bent inwards on the beading part 213.

The electrolyte solution is a salt containing organic liquid injected to allow lithium ions to move between the electrodes of the electrode assembly 100, and may include a nonaqueous organic electrolyte solution comprising a lithium salt, for example, LiPF₆, LiBF₄, LiClO₄ or the like and a high purity organic solvent, but the present disclosure is not limited thereto.

The cap assembly 220 may include a cap cover 222 having at least one through-hole 221, a safety plate 223 fixed to the bottom of the cap cover 222 to cover the edge of the cap cover 222 and having a vent notch in the upper surface, a connection ring 224 installed on the bottom of the safety plate 223, a connection plate 225 coupled to the connection ring 224, and an insulation gasket 226 to insulate the cap cover 222, the safety plate 223, the connection ring 224 and the connection plate 225 from the sidewall 212 of the case 210

The area of contact between the cap cover 222, the safety plate 223, the connection ring 224 and the connection plate 225 may be electrically connected selectively by welding or adhesion.

The cap cover 222, the safety plate 223, the connection ring 224 and the connection plate 225 may be made of steel, a steel alloy, aluminum, an aluminum alloy or an equivalent thereof, but the material is not limited thereto.

An upper insulation plate 230 and a lower insulation plate 240 are coupled to top and bottom of the electrode assembly 100, respectively. The upper insulation plate 230 and the lower insulation plate 240 are made of an insulating material.

The upper insulation plate 230 and the lower insulation plate 240 may be made of a polymer resin, for example, polyethylene, polypropylene, polyethyleneterephthalate (PET), polytetrafluoroethylene (PTFE), polyimide or the like, but the material is not limited thereto.

In the electrode assembly 100, the first tab 112 of the first electrode sheet 110 is extended down through an opening of the lower insulation plate 240 and extended in parallel to a bottom plate 211 of the case 210. Additionally, the end of the first tab 112 is welded to the bottom plate 211.

In the electrode assembly 100, the second tab 122 of the second electrode sheet 120 is extended up through an opening of the upper insulation plate 230 and is bent toward the connection plate 225 of the cap assembly 220. Additionally, the end of the second tab 122 is fixed to the connection plate 225 through welding.

The netlike tube-shaped support 150 is inserted into the cavity 140 of the core of the electrode assembly 100. In an example, the outer diameter of the netlike tube-shaped support 150 is smaller than the diameter of the cavity 140 of the electrode assembly 100. In this case, a gap may be formed between the surface of the netlike tube-shaped support 150 and the inner wall of the cavity 140. In another example, the outer diameter of the netlike tube-shaped support 150 corresponds to the diameter of the cavity 140 of the electrode assembly 100.

To fix the netlike tube-shaped support 150, the top of the netlike tube-shaped support 150 may be fixed to the lower surface of the connection plate 225 through a fixing tab 250. One end of the fixing tab 250 is welded to the top inner wall or the top outer wall of the netlike tube-shaped support 150. The other end of the fixing tab 250 is extended to the connection plate 225 upwards through the opening of the upper insulation plate 230. Additionally, the other end of the fixing tab 250 may be bent in parallel to the connection plate 225 and firmly welded to the lower surface of the connection plate 225. In this instance, the welding location of the fixing tab 250 may be appropriately selected to avoid interference with the second tab 122.

The fixing tab 250 may be made of steel, a steel alloy, aluminum, an aluminum alloy or an equivalent thereof, but the material is not limited thereto.

A fixing sleeve 260 may be interposed between the bottom of the netlike tube-shaped support 150 and the inner wall of the cavity 140 of the electrode assembly 100. Preferably, the fixing sleeve 260 has a tube shape, and the wall thickness of the fixing sleeve 260 corresponds to the gap between the netlike tube-shaped support 150 and the cavity 140.

The fixing sleeve 260 is made of an insulating material. In an example, the fixing sleeve 260 may be made of a polymer resin, for example, polyethylene, polypropylene, polyethyleneterephthalate (PET), polytetrafluoroethylene (PTFE), polyimide or the like, but the material is not limited thereto.

As opposed to the drawing, the bottom of the netlike tube-shaped support 150 may be fixed using the fixing tab (not shown) without using the fixing sleeve 260. In this case, one end of the fixing tab is welded to the outer wall or the inner wall of the bottom of the netlike tube-shaped support 150. Additionally, the other end of the fixing tab may be extended to the bottom plate 211 through the opening of the lower insulation plate 240. Additionally, the other end of the fixing tab may be fixed to the bottom plate 211 by welding without interference with the first tab 112. When the fixing tab is used to fix the bottom of the netlike tube-shaped support 150, the top of the netlike tube-shaped support 150 may be fixed using the fixing sleeve (not shown) without using the fixing tab 250.

The methods for fixing the top and bottom of the netlike tube-shaped support 150 may be identical or different. Additionally, not only the fixing tab and the fixing sleeve but also many other known structures may be selectively used to fix the top and bottom of the netlike tube-shaped support 150.

According to another aspect, at least one wireless sensor 270 may be attached to the surface of the netlike tube-shaped support 150. The wireless sensor 270 may be installed at a plurality of locations along the lengthwise direction of the netlike tube-shaped support 150. The wireless sensor 270 is preferably a micro type.

The drawing shows the wireless sensor 270 installed at each of upper, central and lower parts of the netlike tube-shaped support 150. However, the number of installation locations of the wireless sensor 270 may be smaller or larger.

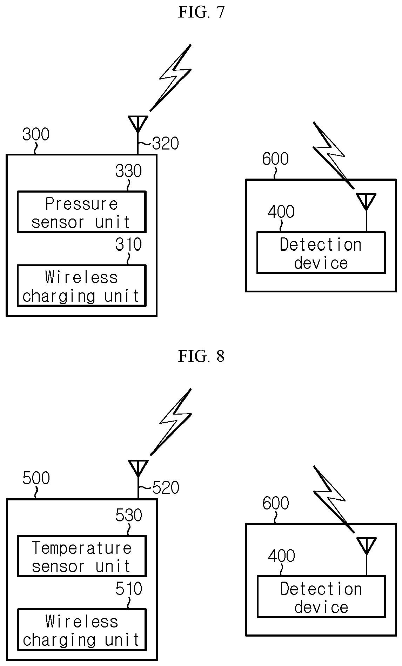

In an example, the wireless sensor 270 may be a wireless pressure sensor 300 as shown in FIG. 7. The wireless pressure sensor 300 is a device that senses the contact pressure when an external object contacts it and wirelessly transmits the pressure sensing value.

Preferably, the wireless pressure sensor 300 may include a wireless charging unit 310 including a magnetoelectric (ME) composite to generate voltage by an external magnetic field, and a pressure sensor unit 330 that operates through the operating voltage generated from the wireless charging unit 310 to sense the pressure and wirelessly transmit the pressure sensing value to an external device through an antenna 320.

The wireless charging unit 310 may include a magnetostrictive material that converts magnetic energy of the external magnetic field into mechanical energy, and a piezoelectric material that generates voltage through the mechanical energy when coupled to the magnetostrictive material.

The wireless pressure sensor 300 may detect deformation of the inner wall of the cavity 140 caused by the stress when the electrode assembly 100 swells, and wirelessly send the pressure sensing value to the external device. That is, when the inner wall of the cavity 140 deforms and comes into contact with the wireless pressure sensor 300, the wireless pressure sensor 300 may wirelessly send the pressure sensing value corresponding to the intensity of contact.

A detection device 400 may be provided to receive the pressure sensing value. When the pressure sensing value is detected through the detection device 400, it is possible to pre-detect a potential collapse of the cavity 140 of the electrode assembly 100 due to the swelling.

In case that a plurality of wireless pressure sensors 300 is provided, each wireless pressure sensor 300 may further transmit a location ID. In this case, the detection device 400 may detect the pressure sensing value by the location of the wireless pressure sensor 300, thereby accurately identifying the location at which the cavity 140 is likely to collapse.

The detection device 400 may periodically apply the magnetic field to the wireless pressure sensor 300 to operate the wireless pressure sensor 300. Then, the operating voltage is generated from the wireless charging unit 310 of the wireless pressure sensor 300 and applied to the pressure sensor unit 330. Then, the pressure sensor unit 330 may generate the pressure sensing value when the external object contacts it and wirelessly transmit the pressure sensing value to the detection device 400 through the antenna 320.

The wireless pressure sensor 300 may be installed at a plurality of locations along the vertical direction of the netlike tube-shaped support 150. In this case, it is possible to accurately detect the location at which the cavity is likely to collapse.

When the wireless pressure sensor 300 is attached to the outer wall of the netlike tube-shaped support 150, the gap is preferably formed between the netlike tube-shaped support 150 and the inner wall of the cavity 140 of the electrode assembly 100. It is desirable to adjust the gap so as to prevent the direct contact between the wireless pressure sensor and the inner wall of the cavity 140.

When the wireless pressure sensor 300 is attached to the inner wall of the netlike tube-shaped support 150, there may be no gap between the netlike tube-shaped support 150 and the inner wall of the cavity 140 of the electrode assembly 100. In this case, the stress occurring due to the collapse of the cavity 140 deforms the wire and/or the strap of the wireless pressure sensor 300, and at this time, pressure sensing may be carried out.

In another example, as shown in FIG. 8, the wireless sensor may be a wireless temperature sensor 500. The wireless temperature sensor 500 is a device that senses the temperature at the location at which the sensor is installed and wirelessly transmits the temperature sensing value.

Preferably, the wireless temperature sensor 500 may include a wireless charging unit 510 including a ME composite to generate voltage by an external magnetic field, and a temperature sensor unit 530 that operates through the operating voltage generated from the wireless charging unit 510 to sense the temperature and wirelessly transmits the temperature sensing value through an antenna 520. The temperature sensor unit 530 may include a micro thermostat.

The wireless charging unit 510 may include a magnetostrictive material that converts magnetic energy of the external magnetic field into mechanical energy, and a piezoelectric material that generates voltage through the mechanical energy when coupled to the magnetostrictive material.

When the detection device 400 detects the temperature sensing value, it is possible to pre-detect a potential sharp temperature rise in the cavity 140 of the electrode assembly 100.

The detection device 400 may periodically apply the magnetic field to the wireless temperature sensor 500 to operate the wireless temperature sensor 500. Then, voltage is generated from the wireless charging unit 510 of the wireless temperature sensor 500 and applied to the temperature sensor unit 530. Then, the temperature sensor unit 530 may sense the temperature at the location at which the sensor is installed to generate the temperature sensing value and wirelessly transmit the temperature sensing value to the detection device 400 through the antenna 520.

The wireless temperature sensor 500 may be installed at a plurality of locations along the vertical direction of the netlike tube-shaped support 150. In case that a plurality of wireless temperature sensors 500 is provided, each wireless temperature sensor 500 may further transmit a location ID. In this case, the detection device 400 may detect the temperature sensing value by the location of the wireless temperature sensor 500, thereby accurately identifying the location at which overheating is likely to occur in the cavity 140.

The overheating in the cavity 140 occurs when an internal short circuit occurs near the cavity due to the swelling of the electrode assembly 100. Accordingly, it is possible to accurately detect the location at which the internal short circuit occurred in the cavity 140 by monitoring the temperature of the cavity 140 through the wireless temperature sensor 500.

The cylindrical battery 200, the wireless sensors 300, 500 and the detection device 400 may form a system according to the present disclosure. The detection device 400 may be included in a battery management device 600 that controls the charge/discharge of the cylindrical battery 200. The battery management device 600 may be included in a load that is supplied with power from the cylindrical battery 200. In this case, the battery management device 600 may monitor the pressure sensing value and/or the temperature sensing value detected by the detection device 400. Additionally, the battery management device 600 may stop the charge or discharge of the cylindrical battery 200 when the pressure sensing value and/or the temperature sensing value is larger than a preset threshold. To this end, the battery management device 600 may turn off a switch installed on a line through which the charge or discharge current flows. Additionally, the battery management device 600 may generate a warning message notifying a potential abnormality in the cylindrical battery 200 and output it through a display. The display may be provided in a device that is supplied with energy from the cylindrical battery 200. In an example, when the device is an electric vehicle, the display may be an integrated display installed at the instrument panel or dashboard.

The present disclosure is useful in analyzing the stress behavior and the cause of the internal short circuit in the core of the electrode assembly in the design stage of the electrode assembly and the cylindrical battery including the same.

Additionally, the present disclosure is useful in pre-detecting the potential overheating caused by the collapse of the cavity or the internal short circuit occurring in the core of the electrode assembly when the cylindrical battery is actually used.

According to an aspect of the present disclosure, the netlike tube-shaped support inserted into the cavity of the electrode assembly used in the cylindrical battery reinforces the strength of the core. Accordingly, it is possible to prevent the collapse of the cavity when the electrode assembly swells, thereby preventing an increase in internal resistance or an occurrence of an internal short circuit in the core of the electrode assembly.

According to another aspect of the present disclosure, the wireless pressure sensor attached to the netlike tube-shaped support may pre-detect the potential swelling causing the cavity of the electrode assembly to collapse. Additionally, when the cavity actually starts to collapse, it is possible to accurately detect the intensity of stress applied to the corresponding area and the location of the corresponding area.

According to still another aspect of the present disclosure, the wireless temperature sensor attached to the netlike tube-shaped support may pre-detect the potential overheating in the cavity of the electrode assembly. Additionally, it is possible to accurately detect the temperature and location of the corresponding area in the event of overheating.

While the present disclosure has been described with regard to a limited number of embodiments and drawings, the present disclosure is not limited thereto and it is obvious to those skilled in the art that various modifications and changes may be made thereto within the technical aspects of the present disclosure and the appended claims and equivalents thereof.

## Claims

1. An electrode assembly, comprising:
a first electrode sheet, a second electrode sheet and a separator sheet interposed therebetween, wherein the first electrode sheet, the second electrode sheet and the separator are wound in one direction,
wherein the electrode assembly has a cavity along a winding central axis, and
wherein a netlike tube-shaped support is installed along a lengthwise direction of the cavity.

2. The electrode assembly according to claim 1, wherein the netlike tube-shaped support is a netlike tube made from a wire and/or a strap.

3. The electrode assembly according to claim 2, wherein the netlike tube-shaped support is a stent support.

4. The electrode assembly according to claim 1, wherein the netlike tube-shaped support is extendable and shrinkable in a radial direction and/or the lengthwise direction.

5. The electrode assembly according to claim 1, wherein a gap is present between the netlike tube-shaped support and an inner wall of the cavity.

6. The electrode assembly according to claim 1, further comprising a wireless sensor attached to the netlike tube-shaped support.

7. The electrode assembly according to claim 6, wherein the wireless sensor is a wireless pressure sensor, and
wherein the wireless pressure sensor is installed in at least one location of an outer or inner surface of the netlike tube-shaped support.

8. The electrode assembly according to claim 6, wherein the wireless sensor is a wireless temperature sensor, and
wherein the wireless temperature sensor is installed in at least one location of an outer or inner surface of the netlike tube-shaped support.

9. A cylindrical battery, comprising:
an electrode assembly including a first electrode sheet, a second electrode sheet and a separator sheet interposed therebetween, wherein the first electrode sheet, the second electrode sheet and the separator sheet are wound in one direction, and the electrode assembly has a cavity along a winding central axis;
a netlike tube-shaped support installed along of a lengthwise direction of the cavity;
a case accommodating the electrode assembly and having an open part at one side thereof; and
a cap assembly coupled to the open part of the case in a manner that the cap assembly can be insulated.

10. The cylindrical battery according to claim 9, wherein the netlike tube-shaped support is a netlike tube made from a wire and/or a strap.

11. The cylindrical battery according to claim 10, wherein the netlike tube-shaped support is a stent support.

12. The cylindrical battery according to claim 9, wherein the netlike tube-shaped support is extendable and shrinkable in a radial direction and/or the lengthwise direction.

13. The cylindrical battery according to claim 9, wherein a gap is present between the netlike tube-shaped support and an inner wall of the cavity.

14. The cylindrical battery according to claim 9, further comprising a wireless sensor attached to the netlike tube-shaped support.

15. The cylindrical battery according to claim 14, wherein the wireless sensor is a wireless pressure sensor, and
wherein the wireless pressure sensor is installed in at least one location of an outer or inner surface of the netlike tube-shaped support.

16. The cylindrical battery according to claim 14, wherein the wireless sensor is a wireless temperature sensor, and
wherein the wireless temperature sensor is installed in at least one location of an outer or inner surface of the netlike tube-shaped support.

17. The cylindrical battery according to claim 9, further comprising a fixing tab configured to fix one end of the netlike tube-shaped support to the cap assembly or a bottom plate of the case.

18. The cylindrical battery according to claim 9, further comprising a fixing sleeve configured to fix one end of the netlike tube-shaped support to an inner wall of the cavity.

19. A system, comprising:
a cylindrical battery including an electrode assembly, the electrode assembly including a first electrode sheet, a second electrode sheet and a separator sheet interposed therebetween, wherein the first electrode sheet, the second electrode sheet and the separator sheet are wound in one direction, and the electrode assembly has a cavity along a winding central axis; a netlike tube-shaped support installed along a lengthwise direction of the cavity; a case accommodating the electrode assembly and having an open part at one side thereof; and a cap assembly coupled to the open part of the case in a manner that the cap assembly can be insulated;
a wireless sensor attached to the netlike tube-shaped support and configured to wirelessly transmit a pressure sensing value or a temperature sensing value; and
a detection device configured to receive the pressure sensing value or the temperature sensing value from the wireless sensor and monitor a pressure or temperature at a location at which the wireless sensor is installed.

20. The system according to claim 19, wherein when the pressure sensing value or the temperature sensing value is larger than a preset threshold, the system is configured to control a switch installed on a line through which a charge or discharge current of the cylindrical battery flows to stop the charge or discharge of the cylindrical battery, or
generate a warning message notifying a potential abnormality in the cylindrical battery and output the warning message through a display.
